# EUROPEAN PATENT APPLICATION

(11) **EP 1 953 902 A2**
(43) Date of publication of application: **06.08.2008**
(21) Application number: 08250240.2
(22) Date of filing: 18.01.2008
(51) Int. Cl.: H02K 19/06, H02K 1/14, H02K 1/18, H02K 3/24, H02K 16/00

(54) **Transversal flux and switched reluctance motor having a toroidal coil comprising liquid cooling**

(30) Priority: 30.01.2007 US 699931
(71) Applicant: ArvinMeritor Technology, LLC, Troy, MI 48084 (US)
(72) Inventor: Kramer, Dennis A., Troy, Michigan 48098 (US)
(74) Representative: Foot, Paul Matthew James

(57) **Abstract**

The present invention deals with a transverse flux motor of the switched reluctance variety. The transverse flux motor consists of multiple phases (530,540,550) where each phase (530,590,550) is spaced axially along the shaft (590). Axial spacing provides many benefits including a decreased weight and a capability to use simple toroidal coils (580) for the windings. An embedded cooling loop is provided within the coils (580) themselves. This cooling loop provides internal temperature regulation for the windings (580) and allows for a higher efficiency among other benefits.

## Description

### BACKGROUND OF THE INVENTION

This application relates to an improved motor, wherein the stator windings of a multi-phase motor are spaced axially along a rotational axis of the motor. In addition, a cooling fluid is circulated through the stator windings.

Traction motors are often required to provide electrical to mechanical conversion for commercial vehicle drive trains. Typically the traction motors used in drive train applications have been three phase AC induction machines. A three phase AC induction machine is a machine that utilizes an induction motor to turn three phase electrical energy into mechanical motion. The primary reason for the use of AC induction machines as traction motors is that AC induction machines are easy to build and use well established technology. The fact that the technology behind AC induction machines is well established and has a large infrastructure allows them to be produced relatively cheaply.

On the other hand, large cost, size, and weight penalties are incurred when standard AC induction machines are adapted to vehicle drive trains. As such, much research has been put into developing new motor designs that can satisfy the cost, size and weight requirements of commercial vehicles.

Typically a goal has been to make induction machines more effective by increasing the output torque while decreasing the overall weight and cost of the machine. Transverse flux machines are the most viable method to fulfill this goal. Two types of transverse flux machines are known in the art, the permanent magnet transverse flux machine and the switched reluctance transverse flux machine. Permanent magnet transverse flux machines are transverse flux machines which utilize a permanent magnet, usually constructed out of rare-earth materials, as part of their rotor construction. Permanent magnet transverse flux machines achieve a high torque per weight ratio. However, permanent magnet transverse flux machines are not optimal. They are difficult to manufacture due to the complex magnet mounting methods used to construct the windings required for machine construction. Also, the torque output of a machine is temperature dependant, and they are highly intolerant of electrical fault conditions.

Switched reluctance machines have several distinct advantages over permanent magnet machines. First, switched reluctance machines provide relatively temperature independent torque, and second, switched reluctance machines are more tolerant of fault conditions. Switched reluctance motors work on the principle that a rotor pole pair has a tendency to align with a charged stator pole pair. By sequentially energizing stator windings the rotor is turned as it realigns itself with the newly energized stator poles in each energization. This allows the production of mechanical movement within the machine without the use of rare-earth materials. Switched reluctance machines have not been developed as much as permanent magnet machines due to, among other reasons, high investment costs in the electronic controls development Current switched reluctance machines use radially spaced phases and have multiple windings per phase that are more difficult to assemble.

### SUMMARY OF THE INVENTION

The goal of the current invention is to design a switched reluctance transverse flux machine that is lighter in weight and produces higher torque. Additionally the goal of the present invention is to reduce assembly costs, and reduce the space required for the machine.

The invention relates to an axially spaced, transverse flux, switched reluctance, traction motor utilizing a single simple wound bobbin coil for each phase winding. As a separate inventive feature, an integral cooling loop is built into each phase winding. Transverse flux, switched reluctance machines are known in the art and provide a variety of benefits including simple design and an acceptable power to weight ratio. Some downsides of using switched reluctance machines are that they have a difficult assembly processes, do not have as high a power efficiency as permanent magnet transverse flux machines, and have high assembly costs.

It is known in the art to create a switched reluctance machine by spacing the phases radially around the rotor. The present invention spaces the phases axially along the rotor. Axial spacing allows the switched reluctance machine to be arranged in such a way that the machine can be constructed using a modular construction technique. The modular construction technique allows each phase to be assembled individually and then be "snapped" together with the other phases. Additional construction techniques not using modular assembly are possible with axially spaced phases, all of which are easier than the assembly techniques of the prior art switched reluctance machines.

A feature of the phase winding construction is made possible by the axial spacing and contributes to the ease in assembly. Known switched reluctance machines, as well as permanent magnet systems, use 'daisy chained' windings, or even more complex and intricate coil winding arrangements. The axial spaced windings with only one coil per phase allows a simple wound bobbin coil to be used for the windings. In this case the windings are circular and easy to assemble. This simple wound bobbin coil not only aids in ease of assembly but uses less copper wire, and reduces the overall weight of the switched reluctance machine. A third benefit resulting from the simple wound bobbin coils is the possibility of adding an integrated cooling loop within the electrical windings.

An integrated cooling loop is a hollow loop wound around the bobbin and embedded within the coil. The loop can be constructed of any material capable of being formed into a tube, having good heat transfer characteristics, and being capable of containing a refrigerant gas or liquid without leakage. The material would also provide benefits if non-conductive to electricity. The embedded cooling loop allows a refrigerant to be pumped through the coil while the switched reluctance machine is in operation. While the refrigerant is pumped through the coils heat is transferred from the coils to the refrigerant, thus cooling the overall system. The hot refrigerant then flows outside the coils. Once outside the coils, the refrigerant is cooled via a heat exchanger and pumped back through the embedded cooling loop. This allows temperature regulation within the coils themselves, providing for higher efficiency and a higher torque output. It is also envisioned that a similar effect could be accomplished using hollow wires to create the winding and pumping the cooling refrigerant directly through the winding wires themselves.

An integrated cooling loop is possible in any motor/generator system implementing simple wound bobbin coils and all motor/generator systems known in the art can benefit from the internal temperature regulation provided by an integrated cooling loop. The benefits provided by an internal temperature regulation system include, but are not limited to, a steadier torque output level due to a constant temperature, the capability of placing the motor/generator in locations where a typical motor/generator would be subject to overheating, and increased efficiency.

These and other features of the present invention can be best understood from the following specification and drawings, the following of which is a brief description.

### BRIEF DESCRIPTION OF THE DRAWINGS

Figure 1 illustrates a possible use for and deployment of an embodiment of the present invention.
Figure 2 illustrates a simple radially spaced switched reluctance machine as found in the prior art.
Figure 3 illustrates an embodiment of the present invention utilizing C shaped stators and C shaped rotors
Figure 4 illustrates a potential layout of phases around the rotor shaft for a three phase embodiment of the present invention.
Figure 5 illustrates a toroidal core for one phase of an axially spaced switched reluctance machine.
Figure 6 illustrates multiple views of a single wound bobbin coil contained within the toroidal core of Figure 3.
Figure 7 illustrates a modular assembly embodiment of the present invention.
Figure 8 illustrates an embodiment of the present invention utilizing C shaped stators and I shaped rotors.
Figure 9 illustrates a cooling circuit.

### DETAILED DESCRIPTION OF THE PREFERRED EMBODIMENT

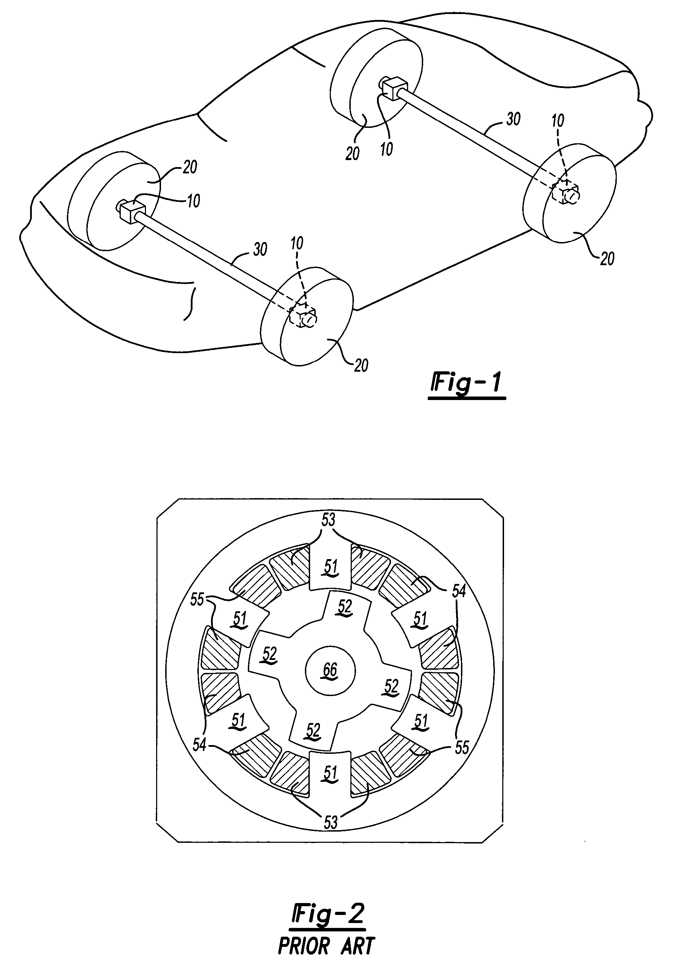

The embodiment of Figure 1 relates to a traction motor for use in an electric drive train for an automobile. Traction motor 10 is placed on a shaft 30 near each of four wheels 20. In the illustrated example the motor is being used in a hybrid electromechanical braking system. The current invention could be utilized in any number of different applications, and provides benefits anywhere a switched reluctance transverse flux machine would be beneficial.

As shown in Figure 2, known standard switched reluctance motors in the prior art are composed of a set of three phase windings 53, 54, 55, each of which is wound on a stator pole 51. Each switched reluctance machine design has a certain number of suitable combinations of stator poles 51 and rotor poles 52. The motor is excited (caused to move) by a sequence of current pulses applied at each phase winding 53, 54, 55. The individual phase windings 53, 54, 55 are consequentially energized, forcing the electric field within the switched reluctance machine to change alignment. The rotor poles 52 then shift to align themselves with the newly changed electric field and rotational motion is created.

When each new phase charges up, the electric field within the switched reluctance machine realigns itself with the stators that correspond with the charged phase causing the rotor poles 52 to shift and realign themselves with the electric field. Using this process the rotor 56 can be made to sequentially shift alignment from one phase to the next; causing a full 360 degrees of rotation after each phase has been activated twice. If the phase windings 53, 54, 55 are sequentially charged and discharged fast enough then the rotation can reach sufficient speeds and generate sufficient torque for most applications. Typically the phases are spread radially in a single ring around the shaft as illustrated in Figure 2. This design introduces downsides including a very harsh fault intolerance, and the necessity of intricate phase windings to accommodate for adjacent phases.

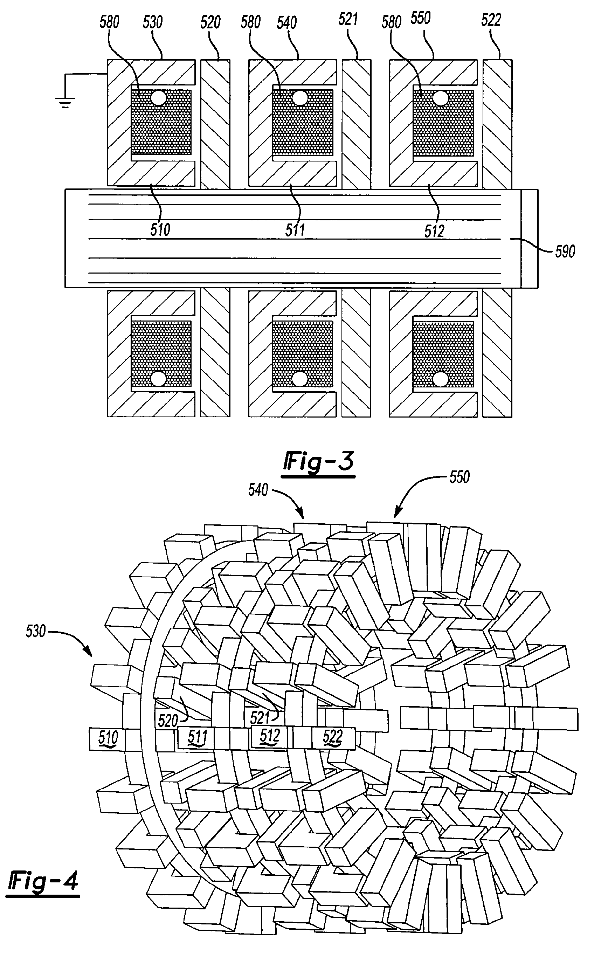

In the present invention the phases 530, 540, 550 are spaced axially along the shaft 590 as illustrated Figure 3. In a design such as the illustrated embodiment each phase 530, 540, 550 consists of its own toroidal core 580 around the rotor shaft 590. The stators 510, 511, 512 for each phase 530, 540, 550 are aligned with each other, and the rotors 520, 521 522 on the shaft 590 are offset for each phase 530, 540, 550 as illustrated in Figure 4. The number of rotors 520, 521, 522 and stators 510, 511, 512 per phase in Figure 4 is reduced for illustration purposes. Each phase 530, 540, 550 is fired up sequentially as in a radially spaced switched reluctance machine. This forces a mechanical rotation similar to the rotation in a radially spaced transverse flux machine.

Figure 4 shows a three dimensional view of how the stators 510 and rotors 520 could be positioned to allow for this effect. Each stator 510 is lined up with the other phase's stators 511, 512 in a column parallel to the rotor shaft 590. The rotors 520 for phase 530 start lined up with the stators 510. The next phase placed axially on the shaft 590 has its rotors 521 offset from the first phase's 530 rotors 520. The third phase 550 placed axially along the shaft 590 has its stators 512 offset from both the first phase 530 and the second phase, 540. The pattern can be modified to allow for any number of phases. However, the industry standard is to use three phases.

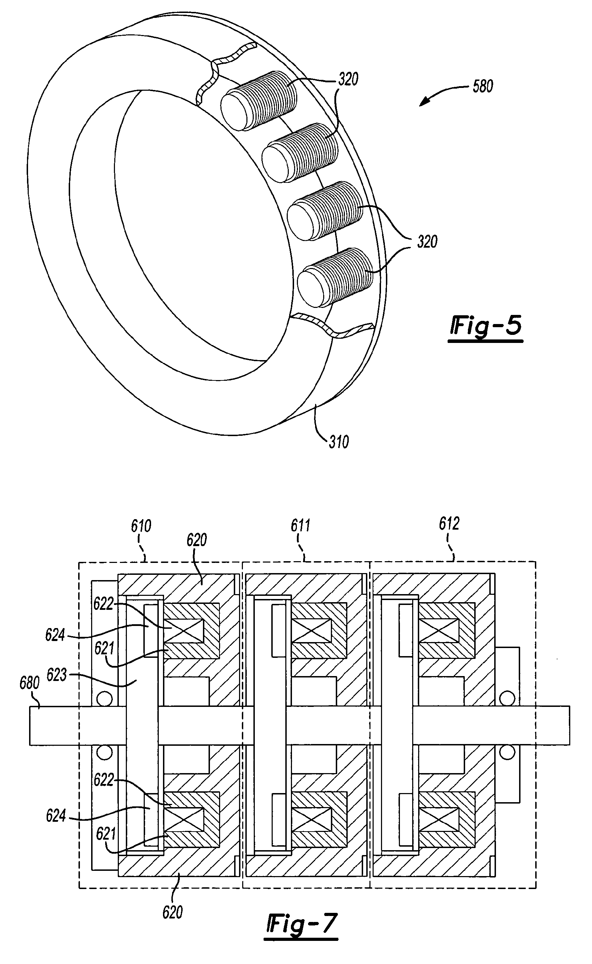

Figure 5 illustrates a toroidal core 580 utilized in each phase of the illustrated embodiment of the invention. The toroidal core consists of a ring shaped housing containing individual simple wound bobbin coils 320 about which the stators are placed. The toroidal core contains one simple wound bobbin coil 320 for each stator 520, 521, 522 which will be placed around the toroid. The coils are connected to each other essentially creating one coil that runs throughout the housing. This connection scheme can be accomplished using a simple input and output connection within the housing for each winding. This setup would connect the input of a given coil with the output of the coil immediately before it in the circle. The first and last coil in the toroid would not be connected to each other, but would instead be connected to an input and output of the core. The coils could also be connected to each other through some other means known in the art to provide a similar effect of connecting the coils together. The stators are placed outside a toroidal core housing 310 and are typically U, or C shaped.

The axial spacing of the three phases 530, 540, 550 allows the machine to be built out of less material, and dramatically reduces the complexity of the windings. Radially spaced windings (like the ones utilized in Figure 2) needed to be complex for the phase windings 53, 54, 55 to accommodate each of the phases immediately adjacent to them. In the present invention the windings can be constructed of simple wound bobbin coils dramatically reducing the complexity. This allows for a lighter design as less material in the windings is wasted in non-essential winding components, such as end turn windings. Lighter design and the simpler winding allows additional features to be implemented that were previously impractical or impossible.

Additionally made possible by the axial spacing of the phases is a modular assembly design. Figure 7 illustrates a modular assembly consisting of three phases 610, 611, 612. Each phase 610, 611, 612 is assembled in an identical fashion and then the phases are "snapped" together to form the three phase switched reluctance machine. The modular assembly consists of a housing 620 containing the stator poles 621 which are C shaped. Contained within the center of the C of the stator poles 621 are the coils 622. Attached to the rotor 623 is a rotor pole 624. The rotor pole 624 is I shaped, and attached to the motor shaft 680. Once each phase 610, 611, 612 has been assembled they are offset around the shaft 680 as described above and fixed into place. This method provides for an easier and faster method of assembling the switched reluctance machine than has previously been available, allowing for a quicker and cheaper manufacturing process.

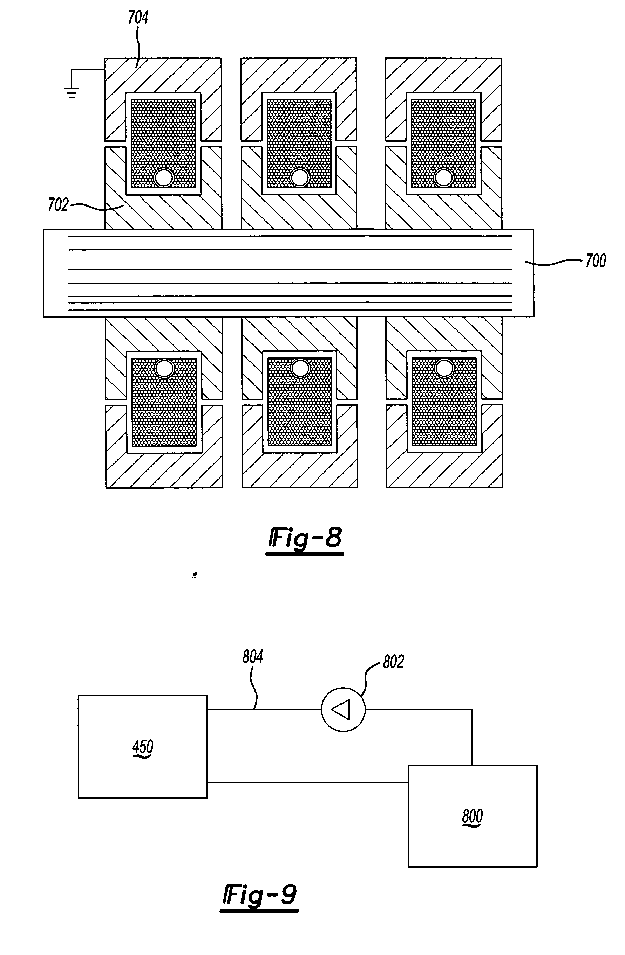

It is additionally possible to construct an axially spaced switched reluctance machine using non-modular assembly. A non-modular assembly requires the switched reluctance machine to be assembled as one step. A benefit provided by a non-modular assembly is that the switched reluctance machine can be built smaller. This is made possible because certain components built into each module which are necessary for a modular design are not necessary and can be removed. Removing the modular components allows a smaller construction and a lighter weight. Additionally non-modular assemblies can be "tailor made" to specific applications much easier than modular assemblies. Figure 3 and Figure 8 illustrate two possible non-modular designs. Figure 8 uses a standard rotor shaft 700 with C shaped rotors 702 attached corresponding to each phase. Also, a C shaped stator 704 design is used. The design of Figure 8 results in both a radial and an axial air gap.

Figure 3 uses a standard rotor shaft with I shaped rotors 520, 521, 522 and C shaped stators 510, 511, 512. The design of Figure 3 results in a radial air gap. The advantages and disadvantages of each design vary dependant on the particular application. A person skilled in the art would be capable of determining an appropriate stator/rotor configuration for any given application. Radial gaps are more tolerant of axial runnout. Axial gaps are more tolerant of radial runnout.

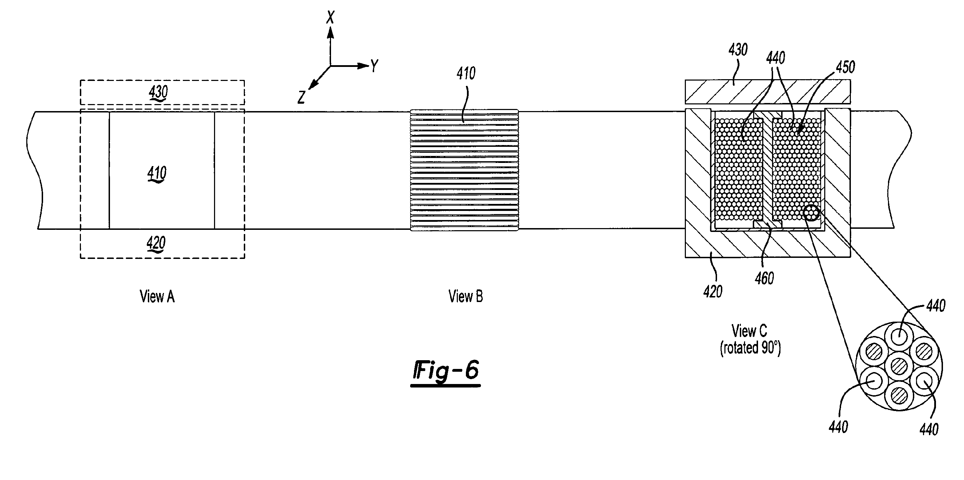

Axial spacing of the phase windings also allows for the use of toroidal cores 580 containing simple wound bobbin coils 320. Because each phase is axially spaced along the shaft, each phase has its own toroidal core 580. This design allows for the windings to be simple wound bobbin coils as the windings do not need to accommodate adjacent phases. An illustration of a toroidal core using simple wound bobbin coils is shown in Figure 6. Figure 6 illustrates a section of the toroidal core with three separate views. View A shows the placement of a simple wound bobbin coil 410 within the toroidal core housing 470. A bobbin is placed in the middle of each C shaped stator 420, resulting in the coil 450 being centered in the middle of the stator 420. In an embodiment using a toroidal core, the toroidal core is placed around the rotor shaft and then the C shaped stators 420 are put into place around each of the simple wound bobbin coils 410. The rotor poles 430 do not need to be aligned at this step as they will automatically align when the motor is turned on. View B illustrates the positioning and orientation of the simple wound bobbin coil 410 relative to the toroidal core housing 310. The windings are arranged such that each wire in the winding runs parallel to the toroidal core housing 470 in the plane formed by the X-axis and the Y-axis and perpendicular to the toroidal core housing 470 in the Z-axis. This orientation aligns the electric field to properly induce motion when the simple wound bobbin coils 410 are charged. View C illustrates a single stator 420 and rotor pole 430 with a simple wound bobbin coil 410 within the C shape of the stator 420. View C is rotated 90 degrees about the Y-axis relative to the rest of the drawing. As shown in view C the coil 450 is wrapped around a bobbin 460, which is snapped into place inside the toroidal core housing 470. An integrated cooling loop 440 is contained within the coils 450 to ensure sufficient temperature regulation. The axial or radial gaps can occur at any points around a closed circuit path form by section of the C and I laminations.

In the present invention a cooling loop 440 may be integrated in the coils 450. Alternatively, a dedicated cooling tube may be included in the coils 450. This is made possible because of the reduced weight and the simple winding design. The cooling loop 440 may consist of any flexible non permeable hollow tubing with adequate heat transfer characteristics. A refrigerant can then be pumped through the cooling loop 440 using any number of available means.

As illustrated schematically in Figure 9, a cooling circuit can be provided with fluid path 804, and a pump 802 removing cooling fluid through the coils 450, and outwardly to a heat exchanger 800. Heat is taken out of the refrigerant circulated through the circuit 804 at heat exchanger 800. Any number of methods for taking heat out of the refrigerant can be utilized. As an example, the heat exchanger could be placed in the path of a fan driven by the motor shaft. Also, more elaborate refrigerant systems including a compressor, an expansion device, etc. can be utilized. Again, a worker of ordinary skill in the art would recognize how to prepare an appropriate refrigerant system. The present invention is directed to the application of a refrigerant system within the coils of an electric motor.

If the coils 450 are constructed out of hollow wires, a similar system can be achieved without the use of an embedded cooling loop. In such a case the refrigerant would be cycled through the hollow wires instead of a cooling loop using a similar method and system as the system used for the embedded cooling loop described above. This would provide for better heat regulation than an embedded cooling loop as the cooled refrigerant would be distributed evenly throughout the coil 450. Additionally this would distribute the cooling refrigerant throughout a larger area and reduce the quantity of materials required for construction of the coils.

Although several embodiments of this invention have been disclosed, a worker of ordinary skill in this art would recognize that certain modifications would come within the scope of this invention. For that reason, the following claims should be studied to determine the true scope and content of this invention.

## Claims

1. A transverse flux, switched reluctance machine consisting of:
a stator having a plurality of phases;
a rotor mounted for rotation relative to said stator about an axis,
said phases being spaced axially along said axis.

2. The machine as recited in Claim 1, wherein magnetic poles on each said phase being separated by approximately equal circumferential angles relative to each other.

3. The machine as recited in Claim 1, wherein said stator phase includes coils, each coil including a bobbin wound coil.

4. The machine as recited in Claim 1, wherein a radial air gap is provided between said stator and said rotor.

5. The machine as recited in Claim 1, wherein an axial air gap is provided between said stator and said rotor.

6. The machine as recited in Claim 1, wherein said stator has C-shaped poles, and said rotor including I-shaped components.

7. The machine as recited in Claim 1, wherein the phases include windings circumferentially separated by an angle determined by dividing 360° by the number of phases in the machine, and divided by the number of magnetic poles per phase.

8. The machine as recited in Claim 1, wherein a cooling circuit is provided within said stator.

9. The machine as recited in Claim 8, wherein said cooling circuit includes a device for circulating a cooling fluid through said cooling circuit, and outwardly of said stator to a remote heat exchanger.

10. The machine as recited in Claim 9, wherein said stator includes hollow wires, and the cooling fluid being circulated within the hollow wires.

11. The machine as recited in claim 9, wherein said cooling circuit includes separate cooling tubing incorporated into the stator.

12. The machine as set forth in Claim 1, wherein the stator is formed of a plurality of modular sections, with there being a single modular section for each of the plurality of phases.

13. A machine for providing rotational drive comprising:
a stator, said stator having a plurality of stator coils, said stator coils being formed by electrically conductive wires, and electrical connections for selectively energizing said stator coils;
a rotor, said rotor having a plurality of rotor elements associated with the stator coils; and
a cooling circuit for cooling said status coils, said cooling circuit including a cooling path for circulating a cooling fluid through the stator coils, and removing heat from the stator coils, said cooling path delivering a heated cooling fluid to a remote heat exchanger where it is cooled.

14. The machine as recited in Claim 13, wherein said cooling circuit includes an element for driving the cooling fluid through the cooling circuit.

15. The machine as recited in Claim 13, wherein the stator coils are formed of hollow wires, and the cooling fluid being circulated within the hollow wires.

16. The machine as recited in Claim 13, wherein the stator coils are formed of solid wires, and dedicated cooling tubing is incorporated into the stator coils.

17. A method of operating an electric machine comprising the steps of:
(1) providing a plurality of stator coils being formed by electrically conductive wires, and electrical connections for selectively energizing said stator coils;
(2) providing a rotor having a plurality of rotor elements associated with the stator coils; and
(3) circulating a cooling fluid through the stator coils, and removing heat from the stator coils, said cooling fluid delivering the heated cooling fluid to a remote heat exchanger where it is cooled.

18. The method as recited in Claim 17, wherein an element drives the cooling fluid.

19. The method as recited in Claim 17, wherein the stator coils are formed of hollow wires, and the cooling fluid being circulated within the hollow wires.

20. The method as recited in Claim 17, wherein the stator coils are formed of solid wires, and dedicated cooling tubing is incorporated into the stator coils.
